# EUROPÄISCHE PATENTSCHRIFT

(11) **EP 3 244 176 B1**
(45) Veröffentlichungstag und Bekanntmachung des Hinweises auf die Patenterteilung: **21.07.2021**
(21) Anmeldenummer: 17164546.8
(22) Anmeldetag: 03.04.2017
(51) Int. Cl.: G01F 23/284, G01S 7/288

(54) **VERFAHREN ZUR ÜBERWACHUNG EINES NACH DEM RADARPRINZIP ARBEITENDEN FÜLLSTANDMESSGERÄT UND FÜLLSTANDMESSGERÄT**
METHOD FOR MONITORING A FILL LEVEL MEASURING DEVICE OPERATING ACCORDING TO THE RADAR PRINCIPLE AND FILL LEVEL MEASURING DEVICE
PROCÉDÉ DE SURVEILLANCE D'UNE JAUGE DE NIVEAU FONCTIONNANT SUR LE PRINCIPE DU RADAR ET JAUGE DE NIVEAU

(30) Priorität: 11.05.2016 DE 102016108665
(43) Veröffentlichungstag der Anmeldung: 15.11.2017
(73) Patentinhaber: KROHNE S.A.S., 26100 Romans-sur-Isère (FR)
(72) Erfinder: Pichot, Vincent, 26100 Romans-sur Isère (FR); Kesba, Mahmoud Khodjet, 26300 Bourg de Peage (FR)
(74) Vertreter: Gesthuysen Patentanwälte

(56) Entgegenhaltungen:
- WO-A1-2010/104461
- DE-A1-102012 014 267
- US-A1- 2006 225 499
- US-A1- 2014 103 950

## Beschreibung

Die Erfindung betrifft ein Verfahren zur Überwachung eines nach dem Radarprinzip arbeitenden Füllstandmessgeräts, wie es im angefügten unabhängigen Patentanspruch 1 spezifiziert ist.

Darüber hinaus betrifft die Erfindung ein nach dem Radarprinzip arbeitendes Füllstandmessgerät, wie es im angefügten unabhängigen Patentanspruch 10 spezifiziert ist.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte physikalische Prinzip ist das Laufzeitverfahren. Im Detail wird ein elektromagnetisches pulsförmiges Signal entlang des Signalleiters ausgesendet, welches an der Füllgutoberfläche reflektiert und anschließend von der Empfangseinheit registriert wird. Aus der Laufzeit des reflektierten Empfangssignals kann der Abstand zur Füllgutoberfläche und bei bekanntem Abstand zum Boden des Behälters der Füllstand des Behälters bestimmt werden. Bei den gesendeten und empfangenen Signalen handelt es sich zumeist um Mikrowellenstrahlung.

Häufig werden dielektrische Resonatoren als Signalleiter eingesetzt. Diese haben ein ähnliches Resonanzverhalten wie Hohlleiter, können aber, da sie nicht über metallische Wandungen verfügen, elektromagnetische Energie abstrahlen und damit als Antennen fungieren.

Messgeräte sind üblicherweise gegen das Füllgut, dessen Füllstand zu bestimmen ist, abgedichtet. Zusätzlich kann eine Leckkammer, die sowohl prozessseitig als auch auf der dem Füllgut abgewandten Seite abgedichtet ist, vorgesehen sein. Insbesondere bei aggressivem, umweltschädlichen oder explosionsgefährlichen Füllgut oder wenn in den Prozessen hohe Drücke und Temperaturen vorliegen, ist eine solche Leckkammer vorteilhaft, um den Zustand der prozessseitigen Dichtung zu überwachen.

Die Erfindung betrifft insbesondere ein Verfahren zur Überwachung der Dichtigkeit einer zwischen dem Behälter und dem Halterungsgehäuse und/oder der Leckkammer angeordneten Dichtung.

Die Druckschrift US 2014/0103950 A1 offenbart ein Verfahren zur Überwachung eines nach dem Radarprinzip arbeitenden Füllstandmessgeräts, wobei das Füllstandmessgerät ein Halterungsgehäuse mit einer prozessseitig angeordneten Leckkammer aufweist und wobei die Leckkammer sowohl prozessseitig als auch auf der dem Füllgut gegenüberliegenden Seite eine Dichtung aufweist. Die Überwachung der prozessseitig angeordneten Dichtung erfolgt durch die Messung des über den Signalleiter geführten Echosignals. Ist eine Dichtung nicht in Ordnung, so kann das im Behälter enthaltene Medium in die Leckkammer eindringen. In Folge der sich dadurch ergebenden Impedanzänderung innerhalb der Leckkammer wird das Sendesignal bereits bei Eintritt in die Leckkammer reflektiert. Insofern lässt sich eine Leckage in der Dichtung zu dem Behälter dadurch nachweisen, dass das Empfangssignal ein zusätzliches pulsförmiges Reflexionssignal aufweist, welches aufgrund seiner Laufzeit örtlich der Leckkammer zuzuordnen ist.

Aus der Druckschrift DE 10 2012 014 267 A1 ist ein Verfahren zur Zustandsüberwachung eines nach dem Radarprinzip arbeitenden Füllstandmessgeräts bekannt, bei dem die Übertragungscharakteristik der Antenne bestimmt und das Ergebnis der Auswertung mit einem Vergleichswert verglichen wird. Dabei wird eine Leckage der Dichtung zwischen dem Messgerät und dem Behälter durch eine Änderung der Übertragungscharakteristik der Antenne registriert.

Ein Verfahren zur Detektion einer Leckage in der Dichtung zwischen dem Messgerät und dem Medium enthaltenen Behälter basierend auf der Zeitbereichsreflektometrie ist ebenfalls aus der DE 10 2006 019 191 A1 bekannt.

Gemäß dem dargelegten Stand der Technik erfolgt der Nachweis einer Leckage ausschließlich im Zeitraum. Eine weitere Auswertung, insbesondere ein Quantifizierung der Veränderung im Empfangssignal, welche weiteren Aufschluss über das eindringende Medium geben könnte, findet jedoch nicht statt.

Ausgehend von diesem Stand der Technik ist es Aufgabe der vorliegenden Erfindung, ein Verfahren zur Überwachung eines nach dem Radarprinzip arbeitenden Füllstandmessgerätes sowie ein entsprechendes Füllstandmessgerät anzugeben, mit welchem neben dem einfachen Nachweis des Vorhandenseins einer Leckage ebenfalls die Änderung im Empfangssignal quantifiziert werden kann.

In den folgenden Ausführungen wird zur Erläuterung des erfindungsgemäßen Verfahrens auf zwei verschiedene Zustände des Füllstandmessgeräts Bezug genommen. Dabei wird mit "defektfrei" der Zustand bezeichnet, in dem alle Dichtungen im Übergangsbereich zwischen dem Behälter und dem Halterungsgehäuse bzw. der Leckkammer in Ordnung sind und kein Medium aus dem Behälter in die Leckkammer eindringen kann. Davon zu unterscheiden ist der Zustand "defekt" im Fall einer Leckage. Damit wird der Zustand bezeichnet, in dem die Dichtung zwischen dem Behälter und dem Halterungsgehäuse bzw. der Leckkammer defekt ist, sodass aus dem Behälter zumindest ein Teil des Mediums in die Leckkammer eindringen kann.

Die oben genannte Aufgabe wird gemäß einer ersten Lehre der vorliegenden Erfindung bei einem eingangs dargelegten Verfahren dadurch gelöst, dass das Frequenzspektrum des Empfangssignals bestimmt wird und die Überwachung im Frequenzraum erfolgt.

Erfindungsgemäß wurde erkannt, dass das Eindringen eines Mediums in die Leckkammer nicht nur eine zusätzliche Reflexion im Empfangssignal bewirkt, sondern sich ebenfalls auf das im Empfangssignal enthaltene Frequenzspektrum auswirkt. Im Detail findet zumindest teilweise eine Frequenzverschiebung der Frequenzen, die im Empfangssignal im defektfreien Zustand enthalten sind, statt. Darüber hinaus enthält das Empfangssignal im Fall einer vorhandenen Leckage, also im Zustand "defekt", weitere Frequenzen und unterscheidet sich dadurch ebenfalls von dem Spektrum im defektfreien Zustand. Dabei hat der Nachweis einer Leckage durch die Änderung im Frequenzspektrum des Empfangssignals den Vorteil, dass Änderungen im Empfangssignal anhand von konkreten Parametern, wie beispielsweise der Größe der Frequenz und/oder der Amplitude der Signale im Frequenzraum, beschrieben werden können, sodass eine Änderung des Empfangssignals nicht nur besonders einfach festgestellt, sondern ebenso einfach auch quantifiziert werden kann.

Dabei können in die Leckkammer eindringende Medien mit verschiedenen Permittivitäten aufgrund ihrer unterschiedlich starken Abschwächung des Sende- bzw. Empfangssignals anhand der Amplituden der Signale im Frequenzspektrum voneinander unterschieden werden. Insofern findet durch das erfindungsgemäße Verfahren nicht nur der reine Nachweis einer Leckage statt, vielmehr kann auch eine Aussage über die Art und/oder die Eigenschaften des eindringenden Mediums getroffen werden.

Gemäß einer ersten vorteilhaften Ausgestaltung wird das Frequenzspektrum des Bereichs des Empfangssignals bestimmt, der aufgrund seiner Laufzeit der Leckkammer zuzuordnen ist. Gemäß dieser Ausgestaltung wird genau der Bereich des Empfangssignals ausgewertet, in dem eine Änderung aufgrund einer Leckage zu erwarten ist. Zum einen kann dadurch ausgeschlossen werden, dass Änderungen im beobachteten Frequenzspektrum auf der Änderung des Füllstandes im Behälter beruhen. Zum anderen sind Änderungen im Frequenzspektrum besonders deutlich und einfach nachzuweisen, da der zu untersuchende Bereich des Empfangssignals keine Frequenzanteile enthält, die auf für das vorliegende Verfahren nicht relevanten Reflexionen basieren. Das Hintergrundssignal kann somit auf ein Minimum reduziert werden. Für das erfindungsgemäße Verfahren nicht relevante Reflexionen sind beispielsweise die Reflexion des Sendesignals an der Füllgutoberfläche oder die Reflexion an dem Boden des Behälters.

Gemäß der Erfindung wird aus dem Frequenzspektrum des Empfangssignals wenigstens ein Überwachungsparameter zur Überwachung des Füllstandmessgeräts extrahiert. Dabei erfolgt, insbesondere während einer laufenden Messung, der Nachweis einer Leckage durch Änderung eines Überwachungsparameters. Gemäß dieser Ausgestaltung kann der Nachweis einer Leckage besonders schnell und zuverlässig erfolgen.

Überwachungsparameter sind vorzugsweise der Wert einzelner Frequenzen und/oder die Amplitude der Signale im Frequenzraum und/oder weitere Parameter, die mittelbar aus dem Frequenzspektrum abgeleitet werden und die sich bei Eindringen eines Mediums in die Leckkammer ändern.

Ein solcher Parameter ist beispielsweise die Resonanzfrequenz des durch die Leckkammer gebildeten Resonators. Dringt in die Leckkammer, die beispielsweise mit trockener Luft gefüllt ist, ein von Luft verschiedenes Medium ein, so ändert sich die Ausbreitungsgeschwindigkeit des Sendesignals, das sich entlang des Signalleiters fortbewegt. In der Folge ändert sich die Resonanzfrequenz des durch die Leckkammer gebildeten Resonators. Diese kann bei Kenntnis der Resonatorlänge aus dem gemessenen Frequenzspektrum bestimmt werden. Insofern ist eine Änderung der Resonanzfrequenz ein Indikator für eine Leckage der interessierenden Dichtung.

Alternativ oder zusätzlich kann ein Überwachungsparameter dadurch bestimmt werden, dass eine Vielzahl von Messwerten, deren Größe von dem Medium in der Leckkammer abhängig ist, zusammengefasst wird und dass wenigstens ein Parameter bestimmt wird, der sich in Abhängigkeit eines oder mehrerer dieser Messwerte ändert.

Besonders bevorzugt werden die gemessenen Frequenzen und/oder die Amplituden der Signale im Frequenzraum in einer Matrix zusammengefasst und es wird ein Parameter bestimmt, der sich in Abhängigkeit der einzelnen Einträge der Matrix ändert. Diese Ausgestaltung weist den Vorteil auf, dass gleichzeitig eine Vielzahl von einzelnen Frequenzen und/oder Amplituden überwacht werden kann, wobei eine Änderung von einzelnen Frequenzen und/oder Amplituden als Nachweis einer Leckage registriert wird.

Beispielsweise kann im Fall einer quadratischen Matrix ein solcher Parameter die Determinante der Matrix sein. Diese ist allein abhängig von den einzelnen Elementen der Matrix und ändert sich, sofern sich ein Eintrag der Matrix ändert. Alternativ oder zusätzlich kann für beliebige Dimensionen der Matrix ein Parameter zur Überwachung des Zustandes des Füllstandmessgeräts ein oder mehrere Singulärwerte der Matrix sein. Diese sind ebenfalls durch die Einträge der Matrix eindeutig bestimmt. Eine Änderung einzelner Einträge resultiert in einer zumindest teilweise Änderung der Singulärwerte, sodass diese Parameter ebenfalls als Überwachungsparameter für den Zustand des Füllstandmessgeräts geeignet sind. Durch diese Ausgestaltung des erfindungsgemäßen Verfahrens lassen sich insbesondere auch in die Lecckammer eindringende Medien mit nur geringfügig unterschiedlicher Permittivität unterscheiden. Insofern ist dieses Verfahren hochempfindlich und daher besonders für den Nachweis einer Leckage geeignet.

Um den Rechenaufwand gering zu halten, wird die Größe bzw. die Dimension der aus den Messwerten gebildeten Matrix derart angepasst, dass eine angemessene Auflösung gewährleistet werden kann.

Zur Extraktion eines Überwachungsparameters aus einer Matrix kann beispielsweise der Matrix Pencil Algorithmus angewendet werden.

Gemäß einer weiteren vorteilhaften Ausgestaltung erfolgt die Bestimmung des Frequenzspektrum durch eine Fouriertransformation des Empfangssignals. Mit Hilfe der Fouriertransformation lassen sich zeitlich kontinuierliche, nicht periodische Signale im Frequenzraum durch eine Zerlegung in einzelnen Frequenzanteilen darstellen. Insofern ist es möglich, einem reflektierten Empfangssignal eine eindeutige Vielzahl an Frequenzen und/oder Amplituden der Signale im Frequenzraum zuzuordnen. Auf diese Weise ist eine Änderung des Empfangssignals besonders einfach nachzuweisen und zu quantifizieren.

Besonders bevorzugt ist es ebenfalls, wenn die Auswerteeinheit eine Vielzahl von hinterlegten Matrizen für verschiedene Medien mit unterschiedlichen Permittivitäten aufweist und wenn die aus den gemessenen Frequenzen und/oder Amplituden erzeugte Matrix mit den hinterlegten Matrizen verglichen wird. Dies hat den Vorteil, dass aus dem gemessenen Empfangssignal auf die Art und/oder die Eigenschaften des Mediums in der Leckkammer geschlossen werden kann.

Dabei ist es besonders vorteilhaft, wenn die Pulslänge des Sendesignals bei der Bestimmung bzw. Aufnahme von Vergleichsmatrizen und/oder bei einer laufenden Messung variiert wird, sodass der Komplexitätsgrad der jeweiligen Matrix angepasst werden kann.

Um den Rechenaufwand zu minimieren, wird vorzugsweise nur im Fall einer Leckage die Matrix zur Bestimmung des in die Leckkammer eintretenden Mediums mit den in der Auswerteeinheit hinterlegten Vergleichsmatrizen verglichen.

Gemäß einer zweiten Lehre der vorliegenden Erfindung wird die eingangs dargelegte Aufgabe durch das eingangs genannte nach dem Radarprinzip arbeitende Füllstandmessgerät dadurch gelöst, dass dieses eine Auswerteeinheit aufweist, die derart ausgestaltet ist, dass das Frequenzspektrum des Empfangssignals bestimmt wird und dass die Überwachung des Füllstandmessgeräts im Frequenzraum erfolgt.

Vorzugsweise ist die Auswerteeinheit zur Durchführung eines der zuvor beschriebenen Verfahren ausgestaltet.

Im Einzelnen gibt es nun eine Vielzahl von Möglichkeiten, das erfindungsgemäße Verfahren zur Überwachung eines nach dem Radarprinzip arbeitenden Füllstandmessgerät und das erfindungsgemäße Füllstandmessgerät auszugestalten. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig.1: ein erstes Ausführungsbeispiel einer erfindungsgemäßen Vorrichtung,
- Fig. 2: ein erstes Ausführungsbeispiels eines erfindungsgemäßen Verfahrens,
- Fig. 3: ein zweites Ausführungsbeispiel einer erfindungsgemäßen Vorrichtung und eines erfindungsgemäßen Verfahrens,
- Fig. 4: eine erste Messung des Empfangssignals sowohl für den defektfreien Zustand als auch für den Fall einer Leckage, wobei zwei verschiedene Medien in die Leckkammer eindringen,
- Fig. 5: die Darstellung des defektfreien Zustandes im Vergleich zu dem Eindringen des ersten Mediums im Frequenzraum,
- Fig. 6: die Darstellung des defektfreien Zustandes im Vergleich zu dem Eindringen des zweiten Mediums im Frequenzraum und
- Fig. 7: eine zweite Messung der Singulärwerte einer Matrix aus gemessenen Frequenzen.

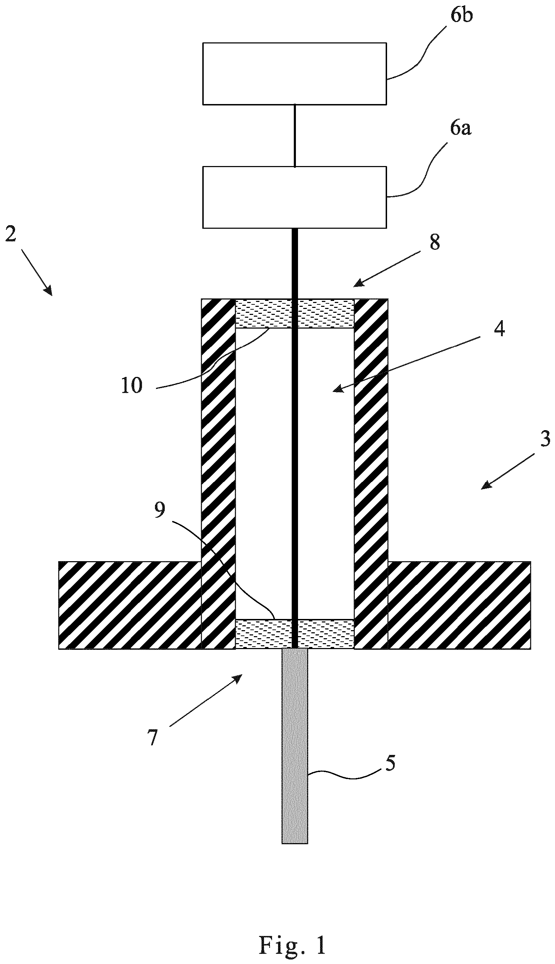

In Fig. 1 ist dargestellt ein erstes Ausführungsbeispiel eines erfindungsgemäßen Füllstandmessgeräts 2, das zur Durchführung eines erfindungsgemäßen Verfahrens 1 geeignet ist. Das Füllstandmessgerät 2 arbeitet nach dem Radarprinzip. Es umfasst ein Halterungsgehäuse 3 mit einer prozessseitig angeordneten Leckkammer 4, einen Signalleiter 5 zum Leiten von Sende- und/oder Empfangssignalen eine Sende- und Empfangseinheit 6a ausgestaltet zum Senden und Empfangen der Sende- bzw. Empfangssignale und eine Steuer-und Auswerteinheit 6b ausgestaltet zum Steuern der Sende- und Empfangseinheit 6a und zum Auswerten der Empfangssignale. Der Signalleiter 5 ist im dargestellten Füllstandmessgerät 2 aus dem Innenraum der Leckkammer 4 des Halterungsgehäuses 3 durch eine prozessseitige erste Öffnung 7 der Leckkammer 4 und des Halterungsgehäuses 3 in den prozessseitigen Außenraum des Halterungsgehäuses 3 geführt. Zudem sind die prozessseitige erste Öffnung 7 der Leckkammer 4 und des Halterungsgehäuses 3 und die der Sende- und Empfangseinheit 6a zugewandte zweite Öffnung 8 der Leckkammer 4 jeweils mit einer ersten Dichtung 9 bzw. mit einer zweiten Dichtung 10 abgedichtet. Hierdurch wird verhindert, dass das in dem nicht dargestellten Behälter enthaltene Medium in die Umwelt gelangen kann. Dies ist insbesondere dann relevant, wenn das im Behälter enthaltene Medium umweltschädlich ist oder wenn im Behälter hohe Drücke herrschen.

Durch das Vorhandensein der Leckkammer 4 kann die Dichtigkeit der prozessseitigen ersten Dichtung 9 durch das erfindungsgemäße Verfahren 1 überprüft werden. Dazu ist im dargestellten Ausführungsbeispiel die Steuer-und Auswerteeinheit 6b derart ausgestaltet, dass sie zu Durchführung des erfindungsgemäßen Verfahrens 1 zur Überwachung eines Füllstandmessgeräts 2 geeignet ist. Im dargestellten Ausführungsbeispiel ist die Leckkammer 4 mit trockener Luft gefüllt. Ist die erste, prozessseitige Dichtung 9 undicht, so dringt Medium aus dem nicht dargestellten Behälter in die Leckkammer 4. Dieser Zustand kann durch das erfindungsgemäße Verfahren 1 schnell und zuverlässig nachgewiesen werden.

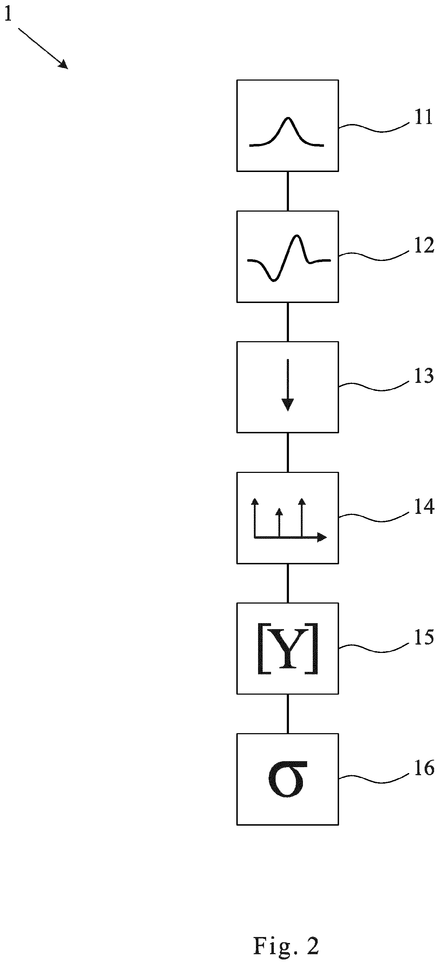

In Fig. 2 ist dargestellt ein erstes Ausführungsbeispiel eines erfindungsgemäßen Verfahrens 1 zur Überwachung eines Füllstandmessgeräts 2, wobei das Füllstandmessgerät 2 gemäß dem in Fig. 1 gezeigten Ausführungsbeispiel ausgestaltet ist. In einem ersten Schritt 11 wird ein pulsförmiges elektromagnetisches Signal, vorliegend ein Radarsignal, entlang des Signalleiters 5 in Richtung des zu vermessenden Mediums ausgesendet. Dieses pulsförmige Signal wird an Impedanzsprüngen, wie dem Übergang in den prozessseitigen, in Fig. 1 nicht dargestellten Behälter oder der Oberfläche des zu vermessenden Mediums reflektiert. In einem zweiten Schritt 12 wird das reflektierte Empfangssignal von der Sende- und Empfangseinheit 6a empfangen und zur weiteren Auswertung an die Steuer- und Auswerteeinheit 6b weitergeleitet 13. In der Steuer- und Auswerteeinheit 6b wird mittels einer Fouriertransformation das Frequenzspektrum des Empfangssignals bestimmt 14.

Dieses einem Empfangssignal zuordenbare Frequenzspektrum ist Grundlage für die Überwachung des Füllstandmessgeräts 2 insbesondere für den Nachweis der Dichtigkeit der ersten, prozessseitigen Dichtung 9. Dabei wird das Vorhandensein einer Leckage durch eine Änderung im gemessenen Frequenzspektrum detektiert. Durch das erfindungsgemäße Verfahren 1 kann damit in vorteilhafter Weise sowohl eine Leckage schnell und zuverlässig detektiert werden. Darüber hinaus ist es auch möglich, aufgrund des Nachweises einer Änderung im Frequenzspektrum diese Änderung anhand konkreter Parameter zu quantifizieren und damit weitere Aussagen über das in die Leckkammer 4 eingedrungene Medium zu machen.

Zur Verbesserung der Detektion von Änderungen im Frequenzspektrum wird im dargestellten Ausführungsbeispiel des erfindungsgemäßen Verfahrens 1 das Frequenzspektrum des Bereichs des Empfangssignals bestimmt, der aufgrund seiner Laufzeit der Leckkammer zuzuordnen ist. Insofern werden nicht relevante Änderungen, wie beispielsweise Änderungen im Füllstand des Behälters für die Auswertung des Nachweises einer Leckage außer Acht gelassen.

Um eine besonders einfache und schnelle Detektion einer Leckage bereitzustellen, wird in einem nächsten Schritt 15 aus dem Frequenzspektrum ein Überwachungsparameter bestimmt, dessen Änderung mit einer Leckage korreliert.

Vorliegend werden dazu die gemessenen Frequenzen und die Amplituden der Signale im Frequenzraum in einer Matrix zusammengefasst, sodass eine Abbildung eines Empfangssignals vorliegt. Aus dieser Matrix werden mit Hilfe der Singulärwertzerlegung 16 die der Matrix eindeutig zuordenbare Singulärwerte der Matrix bestimmt. Diese Singulärwerte ändern sich in Abhängigkeit der einzelnen Einträge der Matrix und insofern in Abhängigkeit der Änderung des Frequenzspektrums. Durch die fortlaufende Bestimmung eines oder mehrerer Singulärwerte der gemessenen Frequenzspektren lässt sich die Dichtigkeit der ersten, prozessseitigen Dichtung 9 kontinuierlich überwachen.

Zudem weist im dargestellten Verfahren die Steuer- und Auswerteeinheit 6b Vergleichsmatrizen basierend auf Frequenzspektren auf, die mit unterschiedlichen Medien aufgenommen oder simuliert wurden. Durch einen Vergleich der in Schritt 15 erstellten Matrix mit den Vergleichsmatrizen kann über den reinen Nachweis einer Leckage hinaus, das in die Leckkammer 4 eindringende Medium bestimmt werden.

Insofern gewährleistet das erfindungsgemäße Verfahren zum einen einen schnellen und zuverlässigen Nachweis einer Leckage in der zu überwachenden Dichtung, zum anderen kann darüber hinaus durch einen Vergleich mit bereits hinterlegten Matrizen das in die Leckkammer eindringende Medium bestimmt werden.

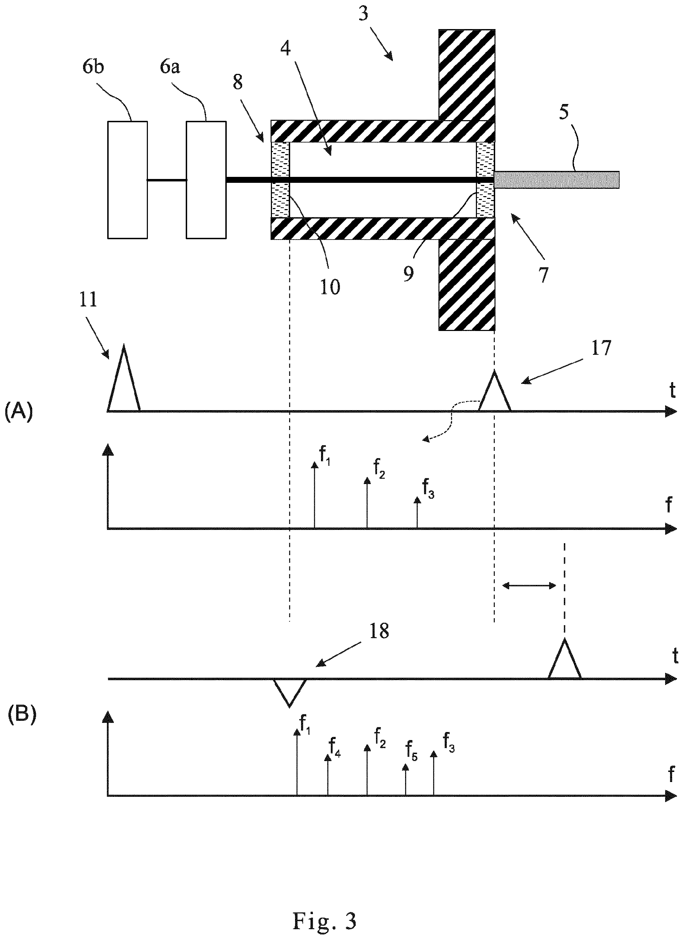

Fig. 3 zeigt ein zweites Ausführungsbeispiel eines erfindungsgemäßen Füllstandmessgeräts 2 und eines erfindungsgemäßen Verfahrens 1 zur Überwachung des Füllstandmessgeräts 2. Das in Fig. 3 gezeigte Ausführungsbeispiel eines erfindungsgemäßen Füllstandmessgeräts 2 weist ein Halterungsgehäuse 3 mit einer prozessseitig angeordneten Leckkammer 4, einen Signalleiter 5 zum Leiten von Sende- und/oder Empfangssignalen eine Sende- und Empfangseinheit 6a ausgestaltet zum Senden und Empfangen der Sende- bzw. Empfangssignale und eine Steuer -und Auswerteinheit 6b ausgestaltet zum Steuern der Sende- und Empfangseinheit und zum Auswerten der Empfangssignale. Der Signalleiter 5 ist im dargestellten Füllstandmessgerät 2 aus dem Innenraum der Leckkammer 4 des Halterungsgehäuses 3 durch eine prozessseitige erste Öffnung 7 der Leckkammer 4 und des Halterungsgehäuses 3 in den prozessseitigen Außenraum des Halterungsgehäuses 3 geführt. Zudem sind die prozessseitige erste Öffnung 7 der Leckkammer und des Halterungsgehäuses 3 und die der Sende- und Empfangseinheit 6a zugewandte zweite Öffnung 8 der Leckkammer jeweils mit einer ersten Dichtung 9 bzw. mit einer zweiten Dichtung 10 abgedichtet.

Im dargestellten Ausführungsbeispiel sind die Impedanzen des Innenraums der Leckkammer 4, der Dichtungen 9, und 10 und des Signalleiters 5 gleich groß.

Die Steuer- und Auswerteeinheit 6b ist derart ausgestaltet, dass sie zur Durchführung des erfindungsgemäßen Verfahrens 1 geeignet ist.

Die unterhalb des Füllstandmessgeräts 2 dargestellten Graphen zeigen ein zweites Ausführungsbeispiel eines erfindungsgemäßen Verfahrens 1. Unter (A) ist ein Ausführungsbeispiel des defektfreien Zustandes dargestellt. Der obere Graph zeigt die Aussendung 11 eines pulsförmigen Signals sowie die Reflexion 17 dieses Signals an dem Impedanzübergang nach der prozessseitigen, ersten Dichtung 9. Der untere Graph zeigt das aus dieser Reflexion bestimmte diskrete Frequenzspektrum, welches aus den Frequenzen f1, f2 und f3 besteht.

Unter (B) ist im Vergleich zu (A) die Situation einer Leckage der ersten Dichtung 9 dargestellt. Aufgrund des in die Leckkammer 4 eingedrungenen Mediums findet bereits aufgrund des Impedanzüberganges nach der zweiten Dichtung 10 eine Reflexion 18 des ausgesendeten pulsförmigen Signals statt. Zudem erfolgt die zweite Reflexion 17, welche am Impedanzübergang nach der ersten Dichtung 9 stattfindet aufgrund der niedrigeren Ausbreitungsgeschwindigkeit des Sendesignals im Medium, das in die Leckkammer 4 eingedrungen ist, zeitlich verzögert. Der untere Graph zeigt das zu dem Empfangssignal zuordenbare Frequenzspektrum. Im Vergleich zu dem unter (A) dargestellten Frequenzspektrum des defektfreien Zustandes findet eine Frequenzverschiebung der Frequenzen f1 bis f3 statt, wobei ebenfalls Unterschiede in den Amplituden der Frequenzen im Frequenzraum bestehen. Darüber hinaus weist das Frequenzspektrum unter (B) zusätzliche Frequenzen f4 und f5 auf.

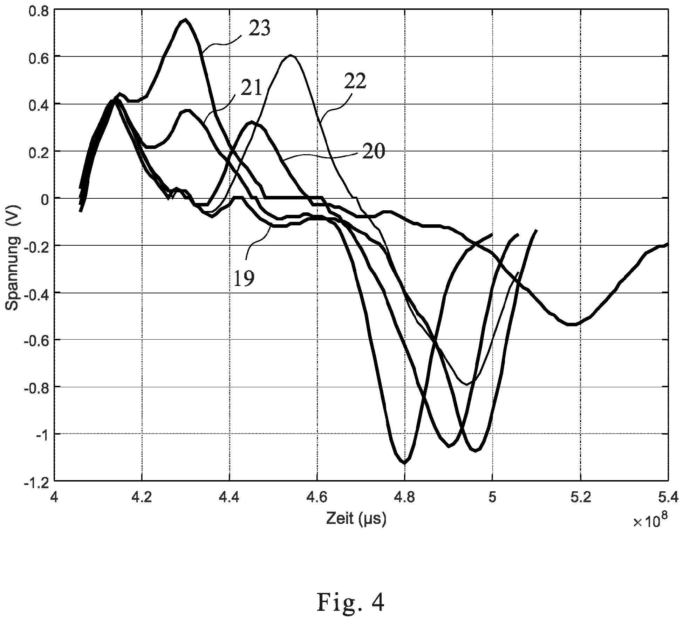

Fig. 4 zeigt eine erste Messung des Empfangssignals sowohl für den defektfreien Zustand als auch für den Fall, dass die Dichtung zwischen dem Behälter und Halterungsgehäuses bzw. der Leckkammer eine Leckage aufweist. Dabei ist genau der Bereich des Empfangssignals abgebildet, der der Lecckammer zuzuordnen ist. Die Messung zeigt zum einen ein erstes Empfangssignal 19 des defektfreien Zustandes. Aufgrund der Reflexion des Signals beim Eintritt und beim Austritt in bzw. aus der Leckkammer weist dieses erste Empfangssignal 19 zwei Pulse auf. Im Vergleich zu diesem Zustand ist ein zweites Empfangssignal 20 eines Zustandes dargestellt, bei dem ein erstes Öl mit einer Permittivität von 2,3 teilweise in die Leckkammer eingedrungen ist. Neben den Pulsen basierend auf dem Ein- und Austritt in bzw. aus der Leckkammer weist der Verlauf des zweiten Empfangssignals 20 eine weiteren Puls auf, der auf der Reflexion des Sendesignals an dem Übergang zu dem ersten Öl basiert. Daneben ist ein drittes Empfangssignal 21 dargestellt, das auf dem Zustand basiert, dass das erste Öl, fast vollständig in die Lecckammer eingedrungen ist. Die zusätzliche Reflexion erfolgt im Vergleich zu dem zweiten Empfangssignal 20 daher zeitlich früher. Schließlich zeigt ein viertes Empfangssignal 22 den Zustand, das ein zweites Öl mit einer Permittivität von 5,7 teilweise in die Leckkammer eingedrungen ist. Auch der Verlauf dieses Empfangssignals 22 weist neben den Reflexionen bei Ein- und Austritt in bzw. aus der Leckkammer einen weiteren Puls auf, der auf der Reflexion des Sendesignals an dem zweiten Öl basiert. Ein weiteres fünftes Empfangssignal 23 zeigt den Zustand, dass das zweite Öl fast vollständig in die Leckkammer eingedrungen ist. Im Vergleich zu dem Verlauf des vierten Empfangssignals 22 erfolgt der zusätzliche Puls insofern zeitlich früher.

Die dargestellte Messung zeigt, wie auch aus dem Stand der Technik bekannt, dass sich das Eindringen eines Mediums in die Leckkammer durch den Verlauf des Empfangssignal nachweisen lässt.

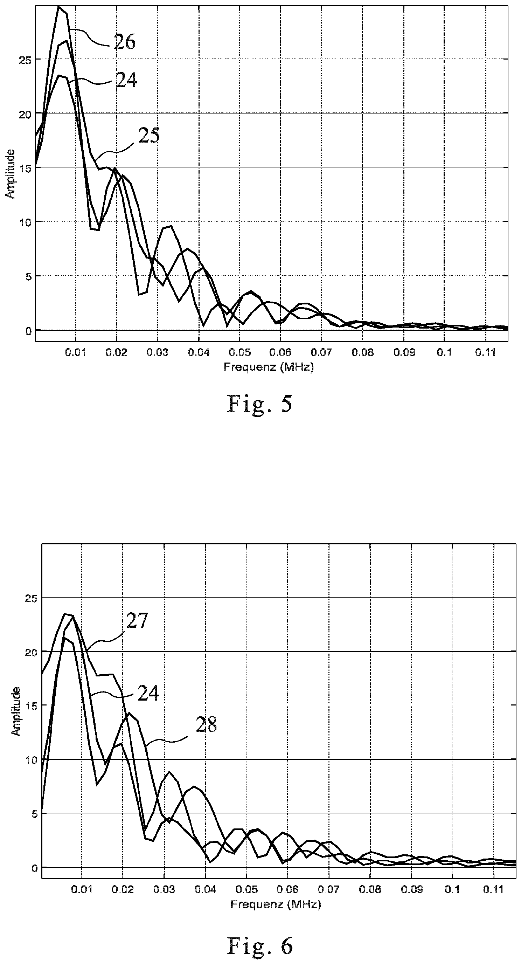

Die Fig. 5 und 6 zeigen die Frequenzzerlegungen der in Fig. 4 gezeigten Empfangssignale. Im Detail zeigt Fig. 5 ein erstes Frequenzspektrum 24 basierend auf dem ersten Empfangssignals 19 im defektfreien Zustand. Daneben zeigt Fig. 5 ein zweites Frequenzspektrum 25, das auf dem Empfangssignal basiert, bei dem das erste Öl teilweise in die Leckkammer eingedrungen ist und ein drittes Frequenzspektrum 26 des Empfangssignals, bei dem das erste Öl fast vollständig in die Leckkammer eingedrungen ist. Der Vergleich zeigt, dass die Frequenzspektren sich sowohl in der Lage einzelner Frequenzen als auch in deren Amplitude unterscheiden.

Fig. 6 zeigt ein erstes Frequenzspektrum 24 basierend auf dem ersten Empfangssignal 19 im defektfreien Zustand. Daneben zeigt Fig. 6 ein zweites Frequenzspektrum 27, das auf dem Empfangssignal basiert, bei dem das zweit Öl teilweise in die Leckkammer eingedrungen ist und ein drittes Frequenzspektrum 28 des Empfangssignal, bei dem das zweite Öl fast vollständig in die Leckkammer eingedrungen ist. Der Vergleich zeigt ebenfalls, dass die Frequenzspektren sich sowohl in der Lage einzelner Frequenzen als auch in deren Amplitude unterscheiden.

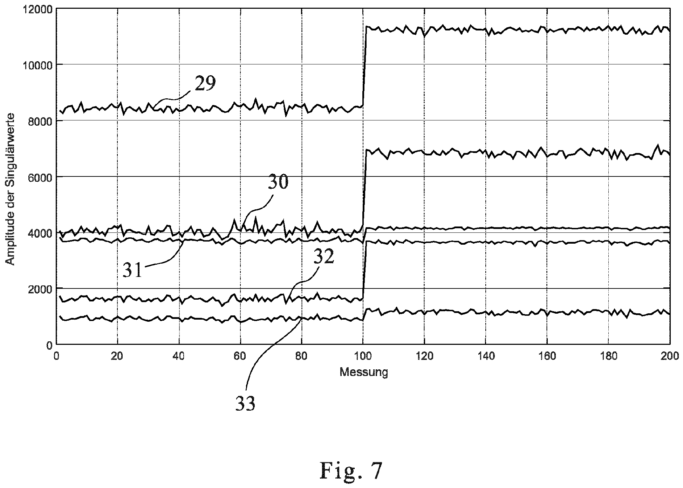

Fig. 7 zeigt die Eignung der Singulärwerte einer Matrix aus Messwerten für den Nachweis einer Leckage. Die dargestellte Messung zeigt zunächst den Verlauf einzelner Singulärwerte 29 bis 33 für den defektfreien Zustand. Ab einem Messwert von 100 zeigt die Messung einen Zustand, in dem die Lecckammer mit dem zweiten Öl befüllt wurde. Dies hat im dargestellten Beispiel eine Änderung jedes einzelnen Singulärwertes zur Folge. Insofern zeigt die Messung die grundsätzliche Eignung der Singulärwerte der Matrix als Überwachungsparameter und insbesondere für den Nachweis einer Leckage.

### Bezugszeichen

- 1.: Verfahren zur Überwachung eines nach dem Radarprinzip arbeitenden Füllstandmessgeräts
- 2.: Füllstandmessgerät
- 3.: Halterungsgehäuse
- 4.: Leckkammer
- 5.: Signalleiter
- 6a.: Sende- und Empfangseinheit
- 6b.: Steuer- und Auswerteeinheit
- 7.: erste Öffnung
- 8.: zweite Öffnung
- 9.: erste Dichtung
- 10.: zweite Dichtung
- 11.: Aussenden eines pulsförmigen Sendesignals
- 12.: Empfangen eines reflektierten Empfangssignals
- 13.: Weiterleiten des Empfangssignals an die Steuer- und Auswerteeinheit
- 14.: Bestimmung des Frequenzspektrums des Empfangssignals
- 15.: Bestimmung eines Überwachungsparameters
- 16.: Singulärwertzerlegung
- 17.: Reflexion
- 18.: Reflexion
- 19.: Empfangssignal des defektfreien Zustandes
- 20.: Empfangssignal wenn die Leckkammer teilweise mit einem ersten Öl gefüllt ist
- 21.: Empfangssignal wenn die Leckkammer fast vollständig mit einem ersten Öl gefüllt ist
- 22.: Empfangssignal wenn die Leckkammer teilweise mit einem zweiten Öl gefüllt ist
- 23.: Empfangssignal wenn die Leckkammer fast vollständig mit einem zweiten Öl gefüllt ist
- 24.: Frequenzspektrum des defektfreien Zustandes
- 25.: Frequenzspektrum des Empfangssignals 21
- 26.: Frequenzspektrum des Empfangssignals 22
- 27.: Frequenzspektrum des Empfangssignals 23
- 28.: Frequenzspektrum des Empfangssignals 24
- 29.: Singulärwert
- 30.: Singulärwert
- 31.: Singulärwert
- 32.: Singulärwert
- 33.: Singulärwert

## Patentansprüche

1. Verfahren (1) zur Überwachung eines nach dem Radarprinzip arbeitenden Füllstandmessgeräts (2), wobei das Füllstandmessgerät (2) ein Halterungsgehäuse (3) mit einer prozessseitig angeordneten Leckkammer (4), einen Signalleiter (5) zum Leiten von Sende- und/oder Empfangssignalen, eine Sende- und Empfangseinheit (6a) ausgestaltet zum Senden und Empfangen der Sende- bzw. Empfangssignale und eine Steuer- und Auswerteeinheit (6b) ausgestaltet zum Steuern der Sende- und Empfangseinheit und zum Auswerten der Empfangssignale aufweist, wobei der Signalleiter (5) aus dem Innenraum der Leckkammer (4) des Halterungsgehäuses (3) durch eine prozessseitige erste Öffnung (7) der Leckkammer (4) und/oder des Halterungsgehäuses (3) in den prozessseitigen Außenraum des Halterungsgehäuses (3) geführt ist, wobei die prozessseitige erste Öffnung (7) der Leckkammer (4) und/oder des Halterungsgehäuses (3) und eine der Sende- und Empfangseinheit (6a) zugewandte zweite Öffnung (8) der Leckkammer (4) und/oder des Halterungsgehäuses (3) jeweils mit einer ersten Dichtung (9) bzw. mit einer zweiten Dichtung (10) abgedichtet sind, umfassend die folgenden Verfahrensschritte:
- Aussenden (11) eines pulsförmigen Sendesignals entlang des Signalleiters (5),
- Empfangen (12) eines reflektierten Empfangssignals,
- Weiterleiten (13) des Empfangssignals an die Steuer- und Auswerteeinheit (6b),
**dadurch gekennzeichnet,**
**dass** das Frequenzspektrum des Empfangssignals bestimmt wird und dass die Überwachung des Füllstandmessgeräts (2) im Frequenzraum erfolgt, wobei aus dem Frequenzspektrum des Empfangssignals wenigstens ein Überwachungsparameter zur Überwachung des Füllstandmessgeräts (2) extrahiert wird (15) und dass eine Leckage als eine Änderung des Überwachungsparameters detektiert wird,wobei sich das Eindringen eines Mediums in die Leckkammer auf das im Empfangssignal enthaltene Frequenzspektrum auswirkt.

2. Verfahren (1) nach Anspruch 1, **dadurch gekennzeichnet, dass** das Frequenzspektrum des Bereichs des Empfangssignals bestimmt wird, der aufgrund seiner Laufzeit der Leckkammer (4) zuzuordnen ist.

3. Verfahren (1) nach einem der Ansprüche 1 oder 2, **dadurch gekennzeichnet, dass** der Überwachungsparameter der Wert einzelner Frequenzen und/oder die Amplitude der Signale im Frequenzraum und/oder weitere Parameter, die mittelbar aus dem Frequenzspektrum abgeleitet werden, ist.

4. Verfahren (1) nach einem der Ansprüche 1 bis 3, **dadurch gekennzeichnet, dass** alternativ oder zusätzlich Überwachungsparameter die Resonanzfrequenzen des Signalleiters (5) sind.

5. Verfahren (1) nach einem der Ansprüche 1 bis 4, **dadurch gekennzeichnet, dass** alternativ oder zusätzlich der Überwachungsparameter dadurch bestimmt wird, dass die einzelnen Frequenzen und/oder Amplituden eines Frequenzspektrums zusammengefasst werden und dass wenigstens ein Parameter bestimmt wird, der sich in Abhängigkeit der Änderung einer oder mehrerer dieser Frequenzen und/oder Amplituden ändert.

6. Verfahren (1) nach einem der Ansprüche 1 bis 5, **dadurch gekennzeichnet, dass** die gemessenen Frequenzen und/oder die Amplituden der Signale im Frequenzraum in einer Matrix zusammengefasst werden, und dass Überwachungsparameter ein oder mehrere Singulärwerte der Matrix ist bzw. sind.

7. Verfahren (1) nach einem der Ansprüche 1 bis 6, **dadurch gekennzeichnet, dass** das Frequenzspektrum durch eine Fouriertransformation des Empfangssignals bestimmt wird.

8. Verfahren (1) nach einem der Ansprüche 1 bis 7, **dadurch gekennzeichnet, dass** die Steuer- und Auswerteeinheit (6b) eine Vielzahl von hinterlegten, gemessenen und/oder simulierten Vergleichsmatrizen für verschiedene Medien aufweist und dass die aus den gemessenen Frequenzen und/oder Amplituden erzeugt Matrix mit den hinterlegten Matrizen verglichen wird.

9. Verfahren nach Anspruch 8, **dadurch gekennzeichnet, dass** nur im Fall einer Leckage zur Bestimmung des in die Leckkammer (4) eintretenden Mediums die Matrix mit den in der Auswerteeinheit (6b) hinterlegten Vergleichsmatrizen verglichen wird.

10. Nach dem Radarprinzip arbeitendes Füllstandmessgerät (2) mit einem Halterungsgehäuse (3) mit einer prozessseitig angeordneten Leckkammer (4), einen Signalleiter (5) zum Leiten von Sende- und/oder Empfangssignalen, eine Sende- und Empfangseinheit (6a) ausgestaltet zum Senden und Empfangen der Sende- bzw. Empfangssignale und eine Steuer- und Auswerteeinheit (6b) ausgestaltet zum Steuern der Sende- und Empfangseinheit und zum Auswerten der Empfangssignale aufweist, wobei der Signalleiter (5) aus dem Innenraum der Leckkammer (4) des Halterungsgehäuses (3) durch eine prozessseitige erste Öffnung (7) der Leckkammer (4) und/oder des Halterungsgehäuses (3) in den prozessseitigen Außenraum des Halterungsgehäuses (3) geführt ist, wobei die prozessseitige erste Öffnung (7) der Leckkammer (4) und/oder des Halterungsgehäuses (4) und eine der Sende- und Empfangseinheit (6a) zugewandte zweite Öffnung (8) der Leckkammer (4) und/oder des Halterungsgehäuses (3) jeweils mit einer ersten Dichtung (9) bzw. mit einer zweiten Dichtung (10) abgedichtet sind,
**dadurch gekennzeichnet, dass** die Auswerteeinheit (6b) ausgestaltet ist zur Bestimmung des Frequenzspektrums des Empfangssignals und zur Überwachung des Füllstandmessgeräts (2) im Frequenzraum, wobei aus dem Frequenzspektrum des Empfangssignals wenigstens ein Überwachungsparameter zur Überwachung des Füllstandmessgeräts (2) extrahiert wird (15) und wobei eine Leckage als eine Änderung des Überwachungsparameters detektiert wird, wobei sich das Eindringen eines Mediums in die Leckkammer auf das im Empfangssignal enthaltene Frequenzspektrum auswirkt.

11. Füllstandmessgerät (2) nach Anspruch 10, **dadurch gekennzeichnet, dass** die Auswerteeinheit (6b) zur Durchführung eines Verfahrens nach einem der Ansprüche 1 bis 9 ausgebildet ist.

## Claims

1. Method (1) for monitoring a level meter (2) operating according to the radar principle, wherein the level meter (2) has a bracket housing (3) with a leakage chamber (4) arranged on the process side, a signal conductor (5) for conducting transmitted and/or received signals, a transmitting and receiving unit (6a) designed for transmitting and receiving the transmitted or, respectively, received signals, and a control and evaluation unit (6b) designed for controlling the transmitting and receiving unit and for evaluating the received signals, wherein the signal conductor (5) is lead out of the inner space of the leakage chamber (4) of the bracket housing (3) through a process-side first opening (7) of the leakage chamber (4) and/or of the bracket housing (3) into the process-side outer space of the bracket housing (3), wherein the process-side first opening (7) of the leakage chamber (4) and/or of the bracket housing (3) and a second opening (8) of the leakage chamber (4) and/or bracket housing (3) facing the transmitting and receiving unit (6a) are each sealed with a first seal (9) or with a second seal (10), comprising the following method steps:
- transmitting (11) a transmitted signal in the form of a pulse along the signal conductor (5),
- receiving (12) a reflected received signal,
- relaying (13) the received signal to the control and evaluation unit (6b) **characterized in,**
**that** the frequency spectrum of the received signal is determined and that the monitoring of the level meter (2) is carried out in the frequency domain, wherein at least one monitoring parameter for monitoring the level meter (2) is extracted from the frequency spectrum of the received signal, and that a leakage is detected as a change in the monitoring parameter, wherein the entering of a medium into the leakage chamber affects the frequency spectrum contained in the received signal.

2. Method (1) according to claim 1, **characterized in that** the frequency spectrum of the range of the received signal is determined, which is to be assigned to the leakage chamber (4) due to its transit time.

3. Method (1) according to claim 1 or 2, **characterized in that** the monitoring parameter is the value of individual frequencies and/or the amplitudes of the signals in the frequency domain and/or further parameters that are indirectly derived from the frequency spectrum.

4. Method (1) according to any one of claims 1 to 3, **characterized in that** additional or alternative monitoring parameters are the resonance frequencies of the signal conductor (5).

5. Method (1) according to any one of claims 1 to 4, **characterized in that** additionally or alternatively, the monitoring parameters are **characterized in that** the individual frequencies and/or amplitudes of a frequency spectrum are combined and that at least one parameter is determined that changes in dependence on the change of one or several of these frequencies and/or amplitudes.

6. Method (1) according to any one of claims 1 to 5, **characterized in that** the measured frequencies and/or the amplitudes of the signals in the frequency domain are combined in a matrix and that one or several singular values of the matrix is/are monitoring parameter(s).

7. Method (1) according to any one of claims 1 to 6, **characterized in that** the frequency spectrum is determined using a Fourier transformation of the received signal.

8. Method (1) according to any one of claims 1 to 7, **characterized in that** the control and evaluation unit (6b) has a plurality of stored, measured and/or simulated reference matrices for different media and that the matrix generated from the measured frequencies and/or amplitudes is compared to the stored matrices.

9. Method (1) according to claim 8, **characterized in that** the matrix for determining the medium entering the leakage chamber (4) is only compared to the reference matrices stored in the evaluation unit (6b) in the case of a leakage.

10. Level meter (2) operating according to the radar principle having a bracket housing (3) with a leakage chamber (4) arranged on the process side, a signal conductor (5) for conducting transmitted and/or received signals, a transmitting and receiving unit (6a) designed for transmitting and receiving of transmitted or received signals and a control and evaluation unit (6b) designed for controlling the transmitting and receiving unit (6a) and for evaluating the received signal, wherein the signal conductor (5) is lead out of the inner space of the leakage chamber (4) of the bracket housing (3) through a process-side first opening (7) of the leakage chamber (4) and/or of the bracket housing (3) into the process-side outer space of the bracket housing (3), wherein the process-side first opening (7) of the leakage chamber (4) and/or of the bracket housing (3) and a second opening (8) of the leakage chamber (4) and/or bracket housing (3) facing the transmitting and receiving unit (6a) are each sealed with a first seal (9) or with a second seal (10),
**characterized in**
**that** the evaluation unit (6b) is designed for determining the frequency spectrum of the received signal for monitoring the level meter (2) in the frequency range, wherein at least one monitoring parameter for monitoring the level meter (2) is extracted from the frequency spectrum of the received signal, and wherein a leakage is detected as a change in the monitoring parameter, wherein the entering of a medium into the leakage chamber affects the frequency spectrum contained in the received signal.

11. Level meter (2) according to claim 10, **characterized in that** the evaluation unit (6b) is designed for carrying out a method according to any one of claims 1 to 9.

## Revendications

1. Procédé (1) de surveillance d'un dispositif de mesure de niveau de remplissage (2) fonctionnant selon le principe du radar, le dispositif de mesure de niveau de remplissage (2) comportant un boîtier de support (3) pourvu d'une chambre de fuite (4) disposée du côté du processus, un conducteur de signal (5) destiné à conduire des signaux d'émission et/ou de réception, une unité d'émission et de réception (6a) conçue pour émettre et recevoir les signaux d'émission ou de réception et une unité de commande et d'évaluation (6b) conçue pour commander l'unité d'émission et de réception et pour évaluer les signaux de réception, le conducteur de signal (5) étant guidé depuis l'espace intérieur de la chambre de fuite (4) du boîtier de support (3) à travers une première ouverture côté processus (7) de la chambre de fuite (4) et/ou du boîtier de support (3) jusque dans l'espace extérieur côté processus du boîtier de support (3), la première ouverture côté processus (7) de la chambre de fuite (4) et/ou du boîtier de support (3) et une deuxième ouverture (8), dirigée vers l'unité d'émission et de réception (6a), de la chambre de fuite (4) et/ou du boîtier de support (3) étant chacune étanchéifiée avec une première garniture d'étanchéité (9) ou une deuxième garniture d'étanchéité (10), le procédé comprenant les étapes de procédé suivantes :
- émettre (11) un signal d'émission en forme d'impulsion le long du conducteur de signal (5),
- recevoir (12) un signal de réception réfléchi,
- transmettre (13) le signal de réception à l'unité de commande et d'évaluation (6b),
**caractérisé en ce que**
le spectre de fréquences du signal de réception est déterminé et **en ce que** la surveillance du dispositif de mesure de niveau de remplissage (2) est effectué dans le domaine de fréquences, au moins un paramètre de surveillance destiné à surveiller le dispositif de mesure de niveau de remplissage (2) étant extrait (15) du spectre de fréquences du signal de réception et **en ce qu'**une fuite est détectée sous la forme d'une variation du paramètre de surveillance, la pénétration d'un milieu dans la chambre de fuite affectant le spectre de fréquences contenu dans le signal de réception.

2. Procédé (1) selon la revendication 1, **caractérisé en ce que** l'on détermine le spectre de fréquences du domaine du signal de réception qui doit être associé à la chambre de fuite (4) en fonction de son temps de propagation.

3. Procédé (1) selon l'une des revendications 1 et 2, **caractérisé en ce que** le paramètre de surveillance est la valeur de fréquences individuelles et/ou l'amplitude des signaux dans l'espace fréquentiel et/ou d'autres paramètres qui dérivent indirectement du spectre de fréquences.

4. Procédé (1) selon l'une des revendications 1 à 3, **caractérisé en ce que**, en variante ou en complément, les paramètres de surveillance sont les fréquences de résonance du conducteur de signal (5).

5. Procédé (1) selon l'une des revendications 1 à 4, **caractérisé en ce que**, en variante ou en complément, l'on détermine le paramètre de surveillance en combinant les fréquences et/ou amplitudes individuelles d'un spectre de fréquences et en déterminant au moins un paramètre qui varie en fonction de la variation d'une ou plusieurs de ces fréquences et/ou amplitudes.

6. Procédé (1) selon l'une des revendications 1 à 5, **caractérisé en ce que** les fréquences et/ou amplitudes mesurées des signaux dans l'espace fréquentiel sont combinées dans une matrice, et **en ce que** des paramètres de surveillance sont une ou plusieurs valeurs singulières de la matrice.

7. Procédé (1) selon l'une des revendications 1 à 6, **caractérisé en ce que** le spectre de fréquences est déterminé par une transformation de Fourier du signal de réception.

8. Procédé (1) selon l'une des revendications 1 à 7, **caractérisé en ce que** l'unité de commande et d'évaluation (6b) comporte une multitude de matrices de comparaison mémorisées, mesurées et/ou simulées pour différents milieux et **en ce que** la matrice générée à partir des fréquences et/ou amplitudes mesurées est comparée aux matrices mémorisées.

9. Procédé selon la revendication 8, **caractérisé en ce que** la matrice est comparée aux matrices de comparaison mémorisées dans l'unité d'évaluation (6b) pour déterminer le milieu entrant dans la chambre de fuite (4) uniquement en cas de fuite.

10. Dispositif de mesure de niveau de remplissage (2) fonctionnant selon le principe du radar, le dispositif de mesure de niveau de remplissage (2) comportant un boîtier de support (3) pourvu d'une chambre de fuite (4) disposée du côté du processus, un conducteur de signal (5) destiné à conduire des signaux d'émission et/ou de réception, une unité d'émission et de réception (6a) conçue pour émettre et recevoir les signaux d'émission ou de réception et une unité de commande et d'évaluation (6b) conçue pour commander l'unité d'émission et de réception et pour évaluer les signaux de réception, le conducteur de signal (5) étant guidé depuis l'espace intérieur de la chambre de fuite (4) du boîtier de support (3) à travers une première ouverture côté processus (7) de la chambre de fuite (4) et/ou du boîtier de support (3) jusque dans l'espace extérieur côté processus du boîtier de support (3), la première ouverture côté processus (7) de la chambre de fuite (4) et/ou du boîtier de support (3) et une deuxième ouverture (8), dirigée vers l'unité d'émission et de réception (6a), de la chambre de fuite (4) et/ou du boîtier de support (3) étant chacune étanchéifiée avec une première garniture d'étanchéité (9) ou une deuxième garniture d'étanchéité (10),
**caractérisé en ce que**
l'unité d'évaluation (6b) est conçue pour déterminer le spectre de fréquences du signal de réception et pour surveiller le dispositif de mesure de niveau de remplissage (2) dans le domaine fréquentiel, au moins un paramètre de surveillance destiné à surveiller le dispositif de mesure de niveau de remplissage (2) étant extrait (15) du spectre de fréquences du signal de réception et une fuite étant détectée sous la forme d'une variation du paramètre de surveillance, la pénétration d'un milieu dans la chambre de fuite affectant le spectre de fréquences contenu dans le signal de réception.

11. Dispositif de mesure de niveau de remplissage (2) selon la revendication 10, **caractérisé en ce que** l'unité d'évaluation (6b) est conçue pour mettre en œuvre un procédé selon l'une des revendications 1 à 9.
